## Europäisches Patentamt
## European Patent Office
## Office européen des brevets

(19)

(11) Veröffentlichungsnummer: **0 158 873**
**B1**

(12)

# EUROPÄISCHE PATENTSCHRIFT

(45) Veröffentlichungstag der Patentschrift:
**05.11.86**

(21) Anmeldenummer: **85103471.0**

(22) Anmeldetag: **25.03.85**

(51) Int. Cl.⁴: **B 65 G 47/78**

(54) Schieber zur Entladung eines Trogkettenförderers.

(30) Priorität: **17.04.84 CH 1921/84**

(43) Veröffentlichungstag der Anmeldung:
**23.10.85 Patentblatt 85/43**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**DE-A-3 243 024**
**GB-A-1 446 555**

(73) Patentinhaber: **Gebrüder Bühler AG, CH- 9240 Uzwil (CH)**

(72) Erfinder: **Straub, Paul, Feldholzstrasse 12a, CH-9242 Oberuzwil (CH)**
Erfinder: **Spadt, Martin, verstorben (CH)**

EP 0 158 873 B1

LIBER, STOCKHOLM 1986

## Beschreibung

Die Erfindung betrifft einen Schieber nach dem Oberbegriff des Patentanspruches 1. Ein solches Schieber ist bekannt und gehört zum Stand der Technik.

Es ist ebenso bekannt, den Steg in einer Lage im Abstand oberhalb der Schieberplatte anzuordnen, so dass diese tiefer als der Boden des Trogkettenförderers liegt. Auf der geschlossenen Schieberplatte bildet sich ein Depot des geförderten Produktes, das erst beim Oeffnen der Austragsöffnung ausgetragen wird. Bei einem Produktwechsel ergibt sich eine meist unerwünschte Vermischung. Dies ist z. B. in einer Futtermühle der Fall, wenn eines der Produkte Fischmehl ist.

Um diesen Nachteil zu vermeiden, hat man den Steg an der Schieberplatte selber angebracht: Auf beiden Seiten des Steges sind in der Schieberplatte Durchbrüche vorgesehen, die sich fast auf der ganzen Breite der Schieberplatte erstrecken. Bei geöffneter Austragsöffnung fällt das Produkt durch diese Durchbrüche. Auf der dem Antrieb entgegengesetzten Seite der Austragsöffnung muss aber beim Schliessen eine beträchtliche Länge der Schieberplatte untergebracht werden, damit die Durchbrüche ausserhalb des Bereichs dieser Austragsöffnung zu liegen kommen. Der Platzbedarf auf dieser Seite ist gross und es entstehen oft auch Probleme durch das Schleppen von Produkteteilen an Dichtungen vorbei.

Die Aufgabe der Erfindung besteht darin, eine Bauart des eingangs angegebenen Schiebers zu schaffen, die bei Vermeiden eines Vermischens von nacheinander geförderten Produkten einfach abzudichten ist, trotz geringem Platzbedarf auf der dem Antrieb entgegengesetzter Seite. Diese Aufgabe wird durch den kennzeichnenden Teil des Anspruchs 1 gelöst.

Wenn die Kopplung erst bei der Annäherung der Schieberplatte an den Steg auf diesen wirkt, ist ein ständiges Stützen der Förderkette, ohne Durchhängen, gewährleistet. Diese Wirkung kann auf konstruktiv einfacher Art erreicht werden, wenn die Kopplung aus einem unmittelbaren Wegstossen des Steges durch die Schieberplatte besteht. Eine einwandfreie Positionierung des Steges kann mit einer Rückzugsvorrichtung für das Zurückbringen dieses Steges in die Lage bei offener Schieberplatte erreicht werden. Diese Rückzugsvorrichtung ist konstruktiv einfach zu verwirklichen durch einen Antrieb mit Federkraft, oder wenn die Schieberplatte selber als Antrieb dient.

Es bestehen zahlreiche Möglichkeiten für die Auslegung der Form der Führung für den Steg. Vorteilhaft sind horizontale und vertikale Führungen, oder auch eine kurvenförmige Führung, insbesondere eine Kreisbahn. Im letzten Fall besteht eine einfache Lösung im Befestigen des Steges auf einem Hebel, dessen am Gestell angebrachtes Drehgelenk eine federnde Gummibüchse ist, die auch als Rückzugsvorrichtung dient.

Bei einer besonders vorteilhaften Ausführungsform des Schiebers ist ein horizontal geführter, in die gleiche Richtung wie die Schieberplatte beweglicher Hilfswagen vorgesehen, der tiefer als diese Schieberplatte liegt und eine Mitnahmevorrichtung trägt, auf welche die Schieberplatte je nach Richtung ihrer Bewegung wirkt. Vorzugsweise weist die Mitnahmevorrichtung zwei im Abstand voneinander angeordnete Mitnehmer auf. Diese Mitnehmer können durch einen an der Schieberplatte befestigten und nach unten ragenden Nocken betätigt werden, der zwischenden beiden Mitnehmern reicht. Die Abmessungen dieser Konstruktion bleiben klein, wenn bei geöffneter Stellung der Schieberplatte, der bei der Schliessbewegung wirkende Mitnehmer in der Nähe des Steges, ungefähr bei der Mitte des Schliessweges der Schieberplatte, liegt, und der bei der Oeffnungsbewegung wirkende Mitnehmer in der Nähe des antriebsseitigen Randes der Austragsöffnung liegt.

Eine einwandfreie Konstruktion des Hilfswagens ergibt sich, wenn er zwei durch einen Querbalken verbundenen Seitenschlitten aufweist, die auf zwei an den Seitenwänden des Gestelles angeordneten parallelen Strecken der horizontalen Führung liegen, wobei die Seitenschlitten zweckmässig durch U-Eisen gebildet sind, deren oberer Flansch durch die vorzugsweise als Rollenbahnen gestalteten parallelen Strecken der horizontalen Führung getragen sind. Es empfiehlt sich, an jedem Seitenschlitten ein paar Mitnehmer zu befestigen. Der Platzbedarf ist minimal, wenn die Länge der Seitenschlitten ungefähr gleich ist wie der Abstand der Mitnehmer, vorzugsweise etwas grösser.

Wenn der Hilfswagen eine Führung, insbesondere eine Höhenführung für die Schieberplatte trägt, entfällt die Notwendigkeit, im Bereich der Austragsöffnung eine besondere horizontale Führung für die Schieberplatte vorzusehen. Die Kraftverhältnisse sind besonders vorteilhaft, wenn die vorzugsweise als Rolle ausgebildete Führung für die Schieberplatte auf der antriebsseitigen Seite des Hilfswagens angebracht ist. Die Konstruktion wird stark vereinfacht, wenn die Schieberplatte bei ihrer rückwärtigen Seite auf Stangen gleitet, die am Gehäuse befestigt sind.

Die Konstruktion wird auch vereinfacht, wenn der Steg am Hilfwagen, vorzugsweise am Querbalken, befestigt ist, wobei der Steg oder der Querbalken als Mitnehmer bei der Schliessbewegung dienen können. Um auch während der Schliessbewegung das Entstehen von Produktresten auf der Schieberplatte zu vermeiden, kann deren vordere Rand, und vorzugsweise auch der Steg auf der Seite dieser Schieberplatte nach unten gebogen sein. Mit Vorteil weist dabei der vordere Rand des Schiebers Einschnitte, die beim Andrücken gegen den Steg Durchbrüche bilden. Wenn das Gestell, auf der dem Antrieb entgegengesetzten Seite, einen Raum zur Aufnahme des Steges bei geschlossener Austragsöffnung aufweist, kann auf einfacher Art eine einwandfreie Dichtung zwischen der Schieberplatte und den festen Teilen des Gestelles, bzw. des Trogkettenförderers, angebracht werden.

Der Hilfswagen kann auch verwendet werden, wenn der Steg am Gestell befestigt ist und knapp oberhalb der Schieberplatte liegt. Damit kann für die festen Teile des Gestells und des Trogkettenförderers die gleiche Konstruktion wie im Fall des beweglichen Steges verwendet werden, was zu grösseren Serien bei der Fabrikation und zu einer Vereinfachung der Lagerhaltung führt. Diese Konstruktion mit festem Steg kommt in Frage, wenn eine geringe Vermischung zwischen nacheinander geförderten Produkten noch zulässig ist.

Die Zeichnung zeigt schematisch als Beispiel vier Ausführungsformen der Erfindung mit einer Variante. Es zeigen:

Fig. 1 einen vertikalen Schnitt durch eine erste Ausführungsform der Erfindung entlang der Linie der I-I der Fig. 2,

Fig. 2 einen Grundriss entlang der Linie II-II der Fig. 1,

Fig. 3 eine Ansicht in Richtung des Pfeiles III der Fig.2 auf zwei Einzelteile, die in vertikaler Richtung leicht verschoben dargestellt sind,

Fig. 4 einen vertikalen Schnitt durch eine zweite Ausführungsform der Erfindung entlang der Linie IV-IV der Fig. 5,

Fig. 5 einen horizontalen Schnitt durch die Linie V-V der Fig. 4,

Fig. 6 einen vertikalen Schnitt entlang der Linie VI-VI der Fig. 4,

Fig. 7 einen vertikalen Schnitt entlang der Linie VII-VII der Fig. 4,

Fig. 8 eine Einzelheit der Fig. 4 in grösserem Maßstab,

Fig. 9 eine Seitenansicht der Fig. 8, in Richtung des Pfeiles IX der Fig. 8,

Fig. 10 einen vertikalen Schnitt durch eine dritte Ausführungsform der Erfindung entlang der Linie X-X der Fig. 11,

Fig. 11 einen horizontalen Schnitt entlang der Linie XI-XI der Fig. 10,

Fig. 12 einen vertikalen Schnitt durch eine vierte Ausführungsform der Erfindung entlang der Linie XII-XII der Fig. 13,

Fig. 13 einen horizontalen Schnitt entlang der Linie XIII-XIII der Fig. 12,

Fig. 14 einen Grundriss einer Variante für die Gestaltung von zwei Einzelteilen der zweiten Ausführungsform nach Fig. 4 - 9.

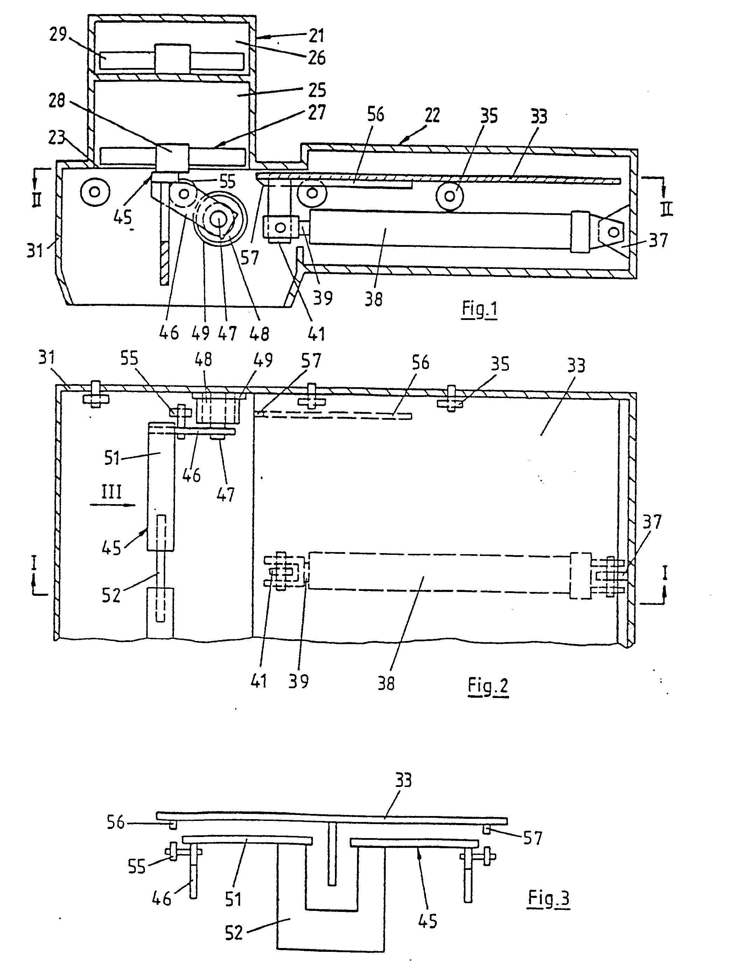

Bei der Ausführungsform der Fig. 1 - 3 ist mit einem Trogkettenförderer 21 ein Schieber 22 zusammmengebaut, der zum Oeffnen und Schliessen einer Austragsöffnung 23 des Trogkettenförderers 21 dient.

Der Trogkettenförderer 21 weist einen Fördertrog 25 und einen Rücklauftrog 26 auf, in welchen eine Förderkette 27 läuft.

Die Förderkette 27 ist durch Kettenglieder 28 gebildet, die seitliche Mitnehmer 29 für das geförderte Schüttgut tragen. Das Gestell 31 des Schiebers 22 umgibt die unterhalb der Förderkette 27 angeordnete Austragsöffnung 23. In diesem Gestell 31 ist eine im wesentlichen horizontale Schieberplatte 33 angeordnet, die zum Oeffnen der Austragsöffnung 23 seitlich verschoben worden ist. Das Gestell 31 trägt Führungsrollen 35, die eine horizontale Führung für die Schieberplatte 33 bilden. Zum Antrieb dieser Schieberplatte 33 ist an einem Support 37 des Gestells 31 ein hydraulischer Zylinder 38 angelenkt, dessen Kolbenstange 39 an einer an der Schieberplatte 33 befestigten Mitnehmerplatte 41 angelenkt ist.

Ein Steg 45 ist auf der Höhe der Schieberplatte 33 angeordnet. Die Kettenglieder 28 der Förderkette 27 sind auf dem Steg 45 gleitend abgestützt. Dieser Steg 45 ist an Hebeln 46 befestigt, die mit den Bolzen 47 der Gummibüchsen 48 fest verbunden sind, deren Töpfe 49 am Gestell 31 befestigt sind. Die Gummibüchsen 48 halten den Steg 45 in seiner Höhenlage.

Der Steg 45 besteht aus zwei symmetrischen Teilen 51, die durch eine U-förmige Bügelplatte 52 verbunden sind, welche den freien Durchgang der Kolbenstange 39 und der Mitnehmerplatte 41 erlaubt. An den Hebeln 46 ist je eine Betätigungsrolle 55 angebracht. Unter der Schieberplatte 33 sind stabförmige Nocken 56 befestigt, dessen Vorderseite 57 angeschrägt ist. Beim Zusammenwirken des Nockens 56 und der Betätigungsrolle 55 entsteht bei der Schliessbewegung der Schieberplatte 33 eine Kopplung zwischen dieser Schieberplatte 33 und dem Steg 45, die zum Entfernen dieses Steges 45 aus seiner Lage dient.

Die Funktion ist folgende:

Um die Austragsöffnung 23 zu schliessen, treibt die Kolbenstange 39 die Mitnehmerplatte 41 mit der Schieberplatte 33 nach links. Im Laufe dieser Bewegung drücken die angeschrägten Vorderseiten 57 der Nocken 56 die Betätigungsrollen 55 gegen die Kraft, bzw. das Drehmoment der Gummibüchsen 48 nach unten, womit der Steg 45 ebenfalls nach unten verschoben wird, und den Raum für die Weiterbewegung der Schieberplatte 33 bis in die geschlossene Lage freigibt.

Wie aus Fig. 1 ersichtlich, ist der Steg 45 bei geöffneter Austragsöffnung 23 gegenüber der vertikalen Symmetrieebene des Trogkettenförderers 21 etwas nach links versetzt. Damit kann die Schieberplatte 33 noch vor dem Niederdrücken des Steges 45 unter die Kettenglieder 28 gelangen, was ein Durchhängen der Förderkette 27 verhindert.

Bei der Oeffnungsbewegung der Schieberplatte 33 nach rechts, geben die Nocken 56 die Betätigungsrollen 55 frei und der Steg 45 wird durch die Federkraft der Gummibüchsen 48 in die Lage bei offener Schieberplatte 33 zurückgebracht. Diese federnden Gummibüchsen 48 dienen sowohl als Drehgelenke einer kurvenförmigen Führung, in diesem Fall einer Kreisbahn, für den Steg 45 wie als Antrieb und Rückzugvorrichtung für das Zurückbringen des Steges 45.

Bei dieser Konstruktion können auf einfacher Art an den festen Teilen des Gestells 31, bzw. des Fördertroges 25 die üblichen Dichtungen für die Schieberplatte 33 angebracht werden.

Bei den weiteren Ausführungsformen der Erfindung sind äquivalente Teile mit den gleichen Bezugszeichen wie bei der ersten Ausführungsform der Fig. 1 - 3 bezeichnet.

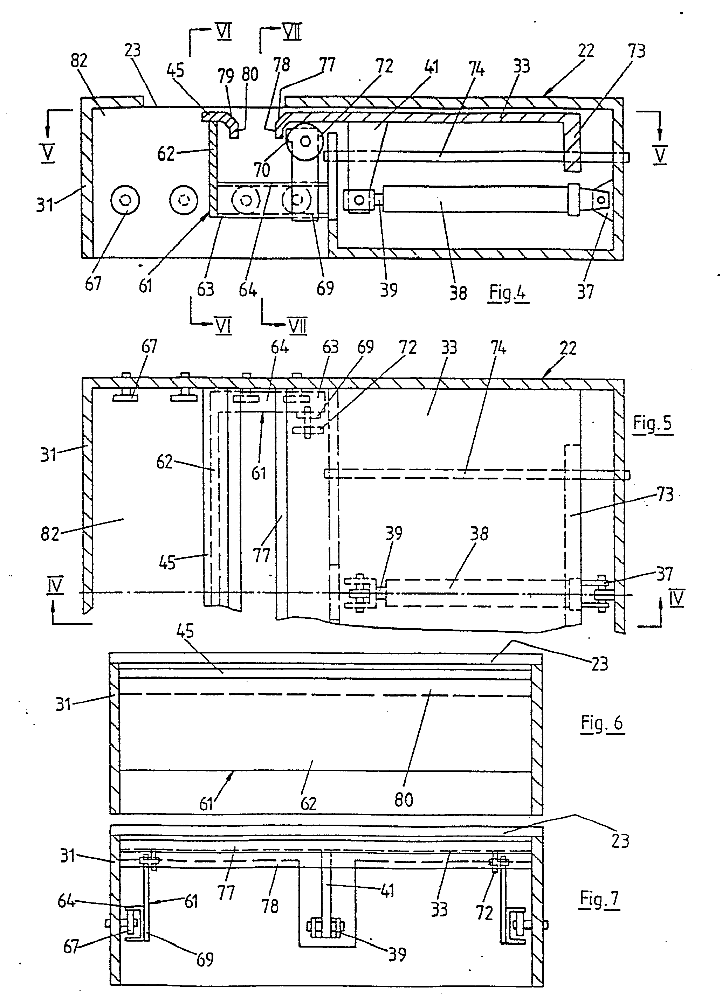

Bei der zweiten Ausführungsform (Fig. 4 - 9) ist ein in die gleiche Richtung wie die Schieberplatte 33 beweglicher Hilfswagen 61 vorgesehen, der tiefer als diese Schieberplatte 33 liegt. Er weist zwei durch einen Querbalken 62 verbundenen Seitenschlitten 63 auf. Die Seitenschlitten 63 sind durch U-Eisen gebildet, deren oberer Flansch 64 auf Führungsrollen 67 getragen sind, die auf jeder Seite des Gestells 31 je eine als Rollenbahn gestaltete parallele Strecke der horizontalen Führung des Hilfswagen 61 bilden.

Der Steg 45 ist am Querbalken 62 des Hilfswagens 61 befestigt.

An jedem Seitenschlitten 63 ist ein plattenförmiger Support 69 befestigt, der mit einem Vorsprung versehen ist, der als Mitnehmer 70 für den Hilfswagen 61 dient. Am Support 69 ist eine Tragrolle 72 angelenkt, die als Höhenführung die Schieberplatte 33 auf der antriebsseitigen Seite des Hilfswagen 61 trägt. Auf der rückwärtigen Seite der Schieberplatte 33 ist eine nach unten gerichtete Rückwand 73 angebracht, die auf Stangen 74 gleitet, die am Gestell 31 befestigt sind.

Der vordere Rand 77 der Schieberplatte 33 ist nach unten geneigt, und setzt sich in einen vertikalen Teil fort, der als Steuernocken 78 für den Antrieb des Hilfswagen 61 dient. Der Rand 79 des Steges 45 auf der Seite des Steuernockens 78 ist nach unten geneigt und setzt sich in einen vertikalen Teil fort, der als Mitnehmer 80 dient. Damit ist am Hilfswagen 61 eine Mitnahmevorrichtung angebracht, welche zwei im Abstand voneinander angeordnete Mitnehmer 70, 80 aufweist, zwischen welchen der Steuernocken 78 reicht, der je nach Richtung seiner Bewegung auf den einen oder auf den anderen der Mitnehmer 70, 80 wirkt.

Auf der dem Antrieb 38, 39 entgegengesetzten Seite weist das Gestell 31 einen Raum 82 auf zur Aufnahme des Steges 45 bei geschlossener Austragsöffnung 23.

Die Funktion ist folgende:

Die Fig. 4 zeigt die Austragsöffnung 23 in geöffneter Stellung. Durch Betätigung der Kolbenstange 39 wird die Schieberplatte 33 nach links bewegt. Dabei stützt sie sich vorn auf den Tragrollen 72 und hinten auf den Stangen 74. Zunächst bleibt der Hilfswagen 61 in seiner Lage. Ungefähr bei der Mitte des Schliessweges gelangt der Steuernocken 78 auf den Mitnehmer 80 und schiebt diesen mit dem Steg 45 und dem Hilfswagen 61 nach links. Somit wirkt die Kopplung erst bei der Annäherung der Schieberplatte 33 an den Steg 45 auf diesen, und besteht aus einem unmittelbaren Wegstossen des Steges 45 durch die Schieberplatte 33. Die Bewegung wird fortgesetzt, bis der Steg 45 in den Raum 82 aufgenommen ist.

Bei der Oeffnungsbewegung bewegt sich die Schieberplatte 33 nach rechts, bis ihr Steuernocken 78 auf die Mitnehmer 70 trifft, und diese samt den Supporten 69 und dem Hilfswagen 61 nach rechts mitnimmt. Die Bewegung setzt sich fort, bis die Austragsöffnung 23 wieder geöffnet ist. Dann befindet sich der Mitnehmer 70 wieder in der Nähe des antriebsseitigen Randes der Austragsöffnung 23. Somit dient der Steg 45 als Mitnehmer bei der Schliessbewegung und die Schieberplatte 33 als Antrieb für die Rückzugsvorrichtung zum Zurückbringen des Steges 45 bei der Oeffnungsbewegung. Ein Vorteil dieser Konstruktion besteht darin, dass nachdem die Tragrollen 72 einen Teil der Schliessbewegung mitmachen, die frei nach links ragende und nicht abgestützte Länge der Schieberplatte 33 nicht sehr gross wird. Vorteilhaft ist die Länge der Seitenschlitten 63 ungefähr gleich, wie der Abstand der Mitnehmer 70, 80, vorzugsweise etwas grösser. Der Mitnehmer 80 braucht sich nicht auf die ganze Breite der Austragsöffnung 23 zu erstrecken. Er kann in der Mitte unterbrochen sein, so dass man sagen kann, dass an jedem Seitenschlitten 63 ein paar Mitnehmer 70, 80 befestigt sind.

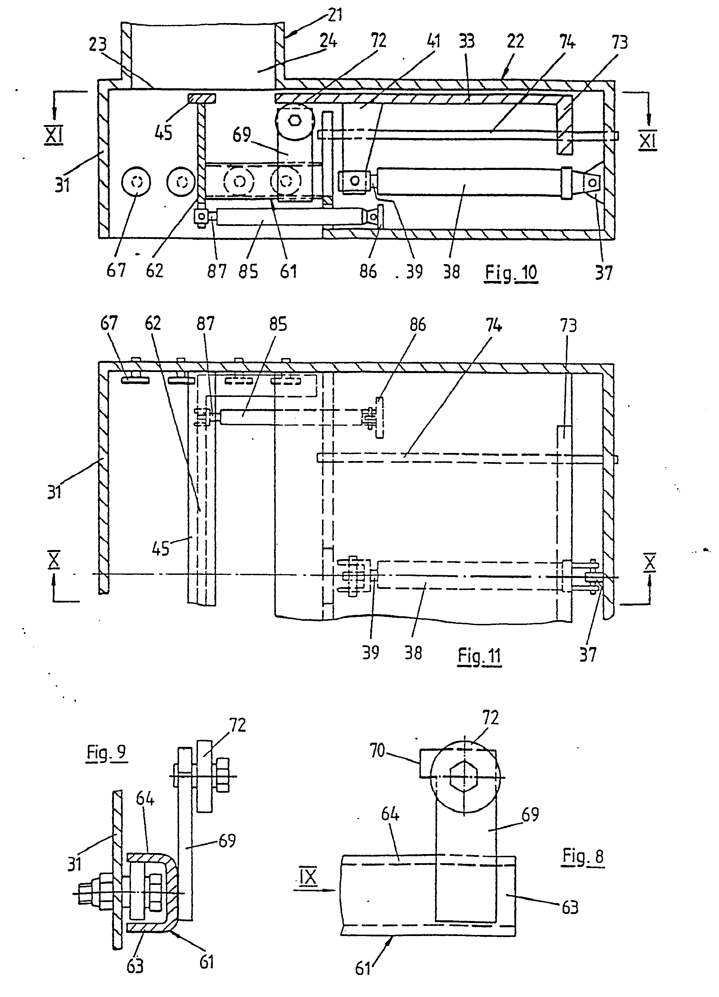

Bei der dritten Ausführungsform (Fig. 10 - 11) ist ein Hilfszylinder 85 an einem Support 86 des Gestells 31 angelenkt. Die Kolbenstange 87 des Hilfszylinders 85 ist am Querbalken 62 angelenkt.

Bei dieser Konstruktion ist es möglich, die Bewegung der Schieberplatte 33 und diejenige des Hilfswagens 61 über die Steuerung des Zylinders 38 und des Hilfszylinders 85 zu koordinieren.

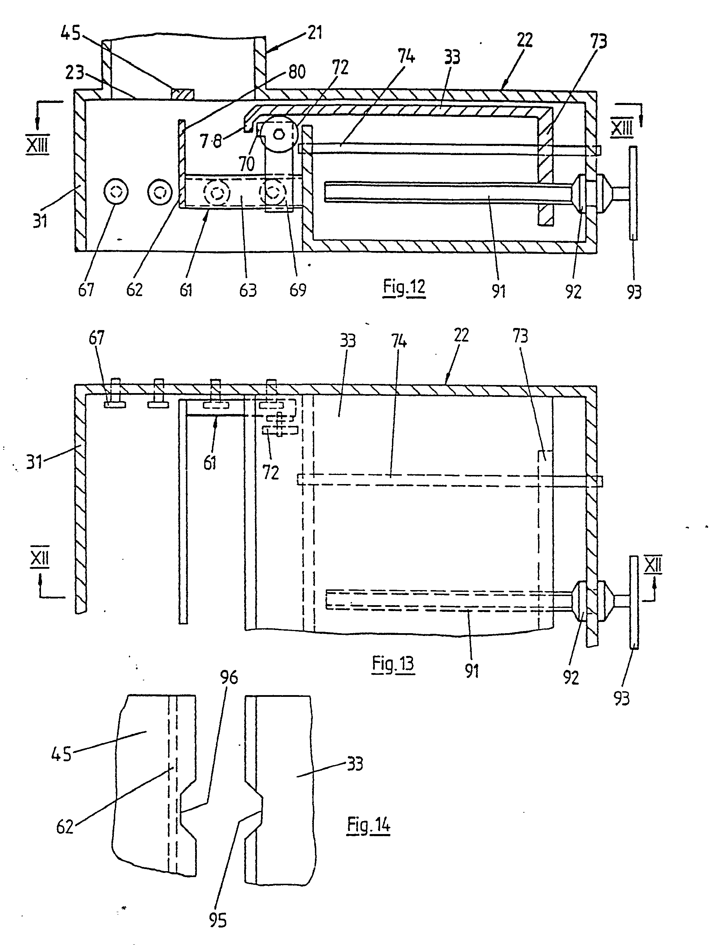

Bei der Vierten Ausführungsform (Fig. 12, 13) ist der Steg 45 am Gestell 31 des Schiebers 22 befestigt, und nicht am Querbalken 62 des Hilfswagens 61.

Zum Antrieb der Schieberplatte 33 dient eine im Eingriff mit der Rückwand 73 dieser Schieberplatte 33 stehende Schraubenspindel 91. Diese ist in einem am Gestell 31 fest angeordneten Lager 92 drehbar gelagert und axial in einer festen Lage gehalten. Zu ihrem Antrieb trägt sie ein Handrad 93.

Durch Drehen an diesem Handrad 93 wird die Schieberplatte 33 verschoben. Der Antrieb des Hilfswagens 61 und seine Funktion sind gleich wie bei der zweiten Ausführungsform der Fig. 4 - 9, mit dem einzigen Unterschied, dass nicht der Steg 45, sondern der Querbalken 62 als Mitnehmer 80 des Hilfswagens 61 dient.

Wie bei den anderen Ausführungsformen kann der Steg 45 knapp oberhalb der Schieberplatte 33 liegen. Wegen dem kleinen Höhenunterschied zwischen diesem Steg 45 und dieser Schieberplatte 33 kann bei der vierten Ausführungsform eine kleine Vermischung von nacheinander geförderten Produkten stattfinden. Diese Vermischung ist aber viel geringer als in bisher bekannten Konstruktionen mit festem Steg.

Wenn man die verschiedenen Ausführungsformen betrachtet, insbesondere die Ausführungsformen 2 - 4, sieht man, dass es mit der Erfindung möglich ist, ein Baukastensystem zu entwickeln, wo Antrieb, Führung, Steuerung und Disposition frei wählbar sind, wobei gleiche Teile bei verschiedenen Ausführungen verwendbar sind, was zu grösseren Serien und rationellere Fertigung führt.

Bei der Variante der Fig. 14, die sonst der dritten Ausführungsform der Fig. 10, 11 entspricht, weist der vordere Rand der Schieberplatte 33 Einschnitte 95 auf. Beim Andrücken der Schieberplatte 33 gegen den Steg 45, der ebenfalls Einschnitte 96 aufweisen kann, werden Durchbrüche gebildet, durch welche allfälliges Restprodukt hindurchfallen kann.

**Patentansprüche**

1. Schieber (22) zur Entladung eines Trogkettenförderers (21), mit einem die unterhalb der Förderkette (27) angeordnete Austragsöffnung (23) umgebenden Gestell (31), das Führungs- und Antriebsmittel (35, 38) für eine im wesentlichen horizontale Schieberplatte (33) aufweist, die zum Oeffnen der Austragsöffnung seitlich verschiebbar ist, wobei am Gestell ein Steg (45) auf der Höhe der Schieberplatte angeordnet ist, auf welchem die Glieder (28) der Förderkette bei geöffneter Austragsöffnung gleitend abgestützt sind, dadurch g e k e n nz e i c h n e t, dass der Steg (45) am Gestell (31) beweglich angeordnet ist, wobei zwischen der Schieberplatte (33) und dem Steg (45) eine Kopplung (55, 56 bzw. 78, 80 bzw. 38, 85) vorhanden ist, die bei der Schliessbewegung der Schieberplatte (33) zum Entfernen des Steges (45) aus seiner Lage dient.

2. Schieber nach Anspruch 1, dadurch gekennzeichnet, dass die Kopplung (55, 56 bzw. 78, 80) erst bei der Annäherung der Schieberplatte (33) an den Steg (45) auf diesen wirkt, und vorzugsweise aus einem unmittelbaren Wegstossen des Steges (45) durch die Schieberplatte (33) besteht.

3. Schieber nach einem der Ansprüche 1 bis 2, dadurch gekennzeichnet, dass eine Rückzugsvorrichtung (48 bzw. 70, 78 bzw. 85) vorhanden ist für das Zurückbringen des Steges (45) in die Lage bei offener Schieberplatte (33), zum Beispiel ein Antrieb mit Federkraft (48), oder die als Antrieb dienende Schieberplatte (33).

4. Schieber nach einem der Ansprüche 1 bis 3, dadurch gekennzeichnet, dass eine kurvenförmige Führung, insbesondere eine Kreisbahn, für den Steg (45) vorhanden ist, wobei der Steg (45) zum Beispiel auf einem Hebel (46) befestigt ist, dessen am Gestell (31) angebrachtes Drehgelenk eine federnde Gummibüchse (48) ist, die auch als Rückzugsvorrichtung dient.

5. Schieber nach einem der Ansprüche 1 bis 3, dadurch gekennzeichnet, dass für den Steg (45) eine horizontale Führung vorhanden ist, auf welcher ein in die gleiche Richtung wie die Schieberplatte (33) beweglicher Hilfswagen (61) vorgesehen ist, der tiefer als die Schieberplatte (33) liegt und eine Mitnahmevorrichtung (70, 80) trägt, auf welche die Schieberplatte (33) je nach Richtung ihrer Bewegung wirkt, wobei vorzugsweise die Mitnahmevorrichtung zwei im Abstand voneinander angeordnete Mitnehmer (70, 80) aufweist, zwischen welchen ein an der Schieberplatte (33) befestigter und nach unten ragender Nocken (78) reicht.

6. Schieber nach Anspruch 5, dadurch gekennzeichnet, dass bei geöffneter Stellung der Schieberplatte (33), der bei der Schliessbewegung wirkende Mitnehmer (80) in der Nähe des Steges (45), ungefähr bei der Mitte des Schliessweges der Schieberplatte (33) liegt, und der bei der Oeffnungsbewegung wirkende Mitnehmer (70) in der Nähe des antriebsseitigen Randes der Austragsöffnung (23) liegt.

7. Schieber nach einem der Ansprüche 5, 6, dadurch gekennzeichnet, dass der Hilfswagen (61) zwei durch einen Querbalken (62) verbundenen Seitenschlitten (63) aufweist, die auf zwei an den Seitenwänden des Gestelles angeordneten parallelen Strecken der horizontalen Führung liegen, wobei die Seitenschlitten (63) durch U-Eisen gebildet werden können, deren obere Flansche (64) durch die vorzugsweise als Rollenbahnen (67) gestalteten parallelen Strecken der horizontalen Führung getragen sind.

8. Schieber nach Anspruch 7, dadurch gekennzeichnet, dass an jedem Seitenschlitten (63) ein Paar Mitnehmer (70, 80) befestigt ist, wobei vorzugsweise die Länge der Seitenschlitten (63) ungefähr gleich ist wie der Abstand der Mitnehmer (70, 80) vorzugsweise etwas grösser.

9. Schieber nach einem der Ansprüche 5 bis 9, dadurch gekennzeichnet, dass der Hilfswagen (61) eine Führung, insbesondere eine Höhenführung, für die Schieberplatte (33) trägt, welche vorzugsweise bei ihrer rückwärtigen Seite auf Stangen (74) gleitet, die am Gestell (31) befestigt sind.

10. Schieber nach Anspruch 9, dadurch gekennzeichnet, dass die, vorzugsweise als Tragrollen (72) ausgebildete, Führung für die Schieberplatte (33) auf der Seite des Hilfswagens (61) angebracht ist, die auf der Seite des Antriebs (38, 39 bzw. 91 bis 93) der Schieberplatte (33) liegt.

11. Schieber nach Anspruch 3 und einem der Ansprüche 5 bis 10, dadurch gekennzeichnet, dass der Steg (45) am Hilfswagen (61) vorzugsweise am Querbalken (62), befestigt ist, und vorzugsweise als Mitnehmer (80) bei der Schliessbewegung dient.

12. Schieber nach Anspruch 11, dadurch gekennzeichnet, dass der Querbalken (62) als Mitnehmer (80) bei der Schliessbewegung dient.

13. Schieber nach einem der Ansprüche 11, 12 dadurch gekennzeichnet, dass der vordere Rand (77) der Schieberplatte (33), und vorzugsweise der Steg (45) auf der Seite der Schieberplatte (33) nach unten geneigt sind.

14. Schieber nach einem der Ansprüche 11 bis 13, dadurch gekennzeichnet, dass der vordere Rand der Schieberplatte (33) Einschnitte (95) aufweist, die beim Andrücken gegen den Steg (45) Durchbrüche bilden.

15. Schieber nach einem der Ansprüche 11 bis 14, dadurch gekennzeichnet, dass das Gestell (31), auf der dem Antrieb (38, 39) entgegengesetzten Seite, einen Raum (82) zur Aufnahme des Steges (45) bei geschlossener Austragsöffnung (23) aufweist.

16. Schieber nach dem Oberbegriff des Patentanspruches 1 und nach den Merkmalen des kennzeichnenden Teils eines oder mehrerer Ansprüche 5 bis 10, 12, 13, 15, dadurch gekennzeichnet, dass der Steg (45) am Gestell (31) befestigt ist und knapp oberhalb der Schieberplatte (33) liegt.

17. Trogkettenförderer versehen mit einem oder mehreren Schiebern nach einem der Ansprüche 1 - 16.

**Claims**

1. Slide valve (22) for discharging from a trough- and chain conveyor (21), with a frame (31) which surrounds the discharge aperture (23) situated below the conveyor chain (27) and which comprises guide and drive means (35, 38) for a substantially horizontal slide valve plate (33) displaceable laterally for opening the discharge aperture, there being arranged on the frame at the height of the slide valve plate a ledge (45) on which the links (28) of the conveyor chain are slidably supported when the discharge aperture is opened, characterised in that the ledge (45) is movably arranged on the frame (31), and between the slide valve plate (33) and the ledge (45) a coupling (55, 56; 78, 80; 38, 85) is provided which serves to remove the ledge (45) from its position at the closing movement of the slide valve plate (33).

2. Slide valve according to claim 1, characterised in that the coupling (55, 56; 78, 80) acts on the ledge (45) only when the slide valve plate (33) approaches the said ledge, and preferably consists in a direct pushing-away of the ledge (45) by the slide valve plate (33).

3. Slide valve according to one of claims 1 and 2, characterised in that a withdrawal device (48) or 70, 78 or 85 respectively) is provided for bringing the ledge (45) back into the position with the slide valve plate (33) open, for example a drive with spring force (48) or with the use of the slide valve plate (33) as a drive means.

4. Slide valve according to one of claims 1 to 3, characterised in that a curved guide, especially a circular path, is provided for the ledge (45), the ledge (45) for example being secured on a lever (46) whose pivot, arranged on the frame (31), is an elastic rubber sleeve (48), which also serves as a withdrawal device.

5. Slide valve according to one of claims 1 to 3, characterised in that there is provided for the ledge (45) a horizontal guide on which there is arranged an auxiliary carriage (61) which is movable in the same direction as the slide valve plate (33) and which is arranged in a lower situation than the slide valve plate (33) and which includes an entrainment device (70, 80), the slide valve plate (33) acting on the said device in accordance with its direction of movement, the entrainment device preferably comprising two entrainment elements (70, 80) which are situated at a spacing from one another and between which there extends a downwardly projecting dog (78) secured on the slide valve plate (33).

6. Slide valve according to claim 5, characterised in that in the opened position of the slide valve plate (33) the entrainment element (80) acting at the closing movement is situated in the vicinity of the ledge (45) approximately at the centre of the closing travel of the slide valve plate (33), and the entrainment element (70) which is active at the opening movement is situated in the vicinity of the drive-side edge of the discharge aperture (23).

7. Slide valve according to one of claims 5 and 6, characterised in that the auxiliary carriage (61) has two side carriages (63) which are connected by a cross-beam (62) and which are situated on two parallel runs of the horizontal guide, these runs being arranged at the side walls of the frame, and the side carriages (63) can be formed by U-irons whose upper flanges (64) are supported by the parallel runs of the horizontal guide, which are formed preferably as roller tracks (67).

8. Slide valve according to claim 7, characterised in that a pair of entrainment elements (70, 80) are secured on each side carriage (63), the length of the side carriages (63) being preferably approximately equal to the spacing of the entrainment elements (70, 80), preferably somewhat greater.

9. Slide valve according to one of claims 5 to 9, characterised in that the auxiliary carriage (61) has a guide, preferably a height guide, for the slide valve plate (33), which preferably slides at its rear side on rods (74) secured on the frame (31).

10. Slide valve according to claim 9, characterised in that the guide for the slide valve plate (33), which guide is constructed preferably as supporting rollers (72), is arranged at that side of the auxiliary carriage (61) which is directed towards the drive (38, 39 or 91 to 93 respectively) of tye slide valve plate (33).

11. Slide valve according to claim 3 and one of claims 5 to 10, characterised in that the ledge (45) is secured to the auxiliary carriage (61), preferably on the crossbeam (62), and preferably serves as an entrainment element (80) in the closing movement.

12. Slide valve according to claim 11, characterised in that the transverse beam (62) serves as entrainment element (80) in the closing movement.

13. Slide valve according to one of claims 11, 12, characterised in that the front edge (77) of the slide valve plate (33), ae slide valve plate (33), are downwardly inclined.

14. Slide valve according to one of claims 11 to 13 characterised in that the front edge of the slide valve plate (33) comprises recesses (95) which on application against the ledge (45) form through apertures.

15. Slide valve according to one of claims 11 to 14, characterised in that the frame (31), at the side opposite from the drive (38, 39), comprises a space (82) for receiving the ledge (45) when the discharge aperture (23) is closed.

16. Slide valve according to the precharacterising part of claim 1 and according to the features of the characterising part of one or more claims 5 to 10, 12, 13, 15, characterised in that the ledge (45) is secured on the frame (31) and is situated just above the slide valve plate (33).

17. Trough-and-chain conveyor provided with one or more slide valves according to one of claims 1 - 16.

**Revendications**

1. Dispositif de registre à glissement (22) destiné au déchargement d'un transporteur en auge à chaîne (21) dispositif comportant un châssis (31) qui entoure le passage de sortie (23), prévu en dessous de la chaîne transporteuse (27) et qui est muni d'éléments de guidage (35) et de commande (38) pour une plaque de registre à glissement (33) en substance horizontale, pouvant être déplacée latéralement en vue de l'ouverture du passage de sortie, le châssis étant muni, au niveau de la plaque de registre, d'une traverse (45) sur laquelle les maillons (28) de la chaîne transporteuse prennent appui, avec possibilité de glissement, lorsque le passage de sortie est ouvert, le dispositif étant caractérisé en ce que la traverse (45) dont est muni le châssis (31) est prévue mobile, un accouplement (55, 56 ou 78, 80 ou 38, 85) étant prévu entre la plaque de registre (33), et la traverse (45), accouplement qui, lors du mouvement de fermeture de la plaque de registre (33), sert à l'éloignement de la traverse (45) de la position qu'elle occupe.

2. Dispositif de registre à glissement suivant la revendication 1, caractérisé en ce que l'accouplement (55, 56 ou 78, 80) n'agit sur la traverse (45) que lorsque la plaque de registre (33) se rapproche de cette traverse, et en ce qu'il provoque avantageusement un repoussement immédiat de la traverse (45) par la plaque de registre (33).

3. Dispositif de registre à glissement suivant l'une ou l'autre des revendications 1 et 2, caractérisé en ce qu'il comporte un dispositif de rappel (48, ou 70, 78 ou 85) pour le retour de la traverse (45) à la position qu'elle occupe lorsque la plaque de registre (33) est ouverte, dispositif de rappel qui est par exemple constitué par une commande à force de ressort (48) ou par la plaque de registre (33) même servant de commande.

4. Dispositif de registre à glissement suivant l'une quelconque des revendications 1 à 3, caractérisé en ce qu'il est prévu un guidage en courbe, en particulier une voie circulaire, pour la traverse (45), la traverse (45) étant par exemple fixée à un levier (46) dont l'articulation de rotation prévue sur le châssis (31) est constituée par un manchon de caoutchouc faisant ressort (48), qui sert également de dispositif de rappel.

5. Dispositif de registre à glissement suivant l'une quelconque des revendications 1 à 3, caractérisé en ce que pour la traverse (45), il est prévu un guidage horizontal sur lequel se trouve un chariot auxiliaire (61) pouvant être déplacé dans la même direction que la plaque de registre (33), chariot auxiliaire qui se trouve à un niveau inférieur à celui de la plaque de registre (33) et qui porte un dispositif d'entraînement (70, 80) sur lequel la plaque de registre (33) agit selon le sens de son déplacement, le dispositif d'entraînement comportant avantageusement deux organes d'entraînement (70, 80) prévus à distance l'un de l'autre, entre lesquels s'engage un élément en saillie (78) fixé à la plaque de registre (33) et s'avançant vers le bas.

6. Dispositif de registre à glissement suivant la revendication 5, caractérisé en ce que, dans la position d'ouverture de la plaque de registre (33), l'organe d'entraînement (80) agissant lors du mouvement de fermeture se trouve à proximité de la traverse (45) à peu prés à la moitié du trajet de fermeture de la plaque de registre (33) et l'organe d'entraînement (70) agissant lors du mouvement d'ouverture se trouve à proximité du bord côté commande du passage de sortie (23).

7. Dispositif de registre à glissement suivant l'une des revendications 5, 6, caractérisé en ce que le chariot auxiliaire (61) présente deux coulisseaux latéraux (63) réunis par une barre transversale, (62) qui se trouvent sur deux zones parallèles de guidage horizontal disposées sur les parois latérales du châssis, les coulisseaux latéraux (63) étant formés de fers en U dont les ailes supérieures (64) sont portées par les zones parallèles de guidage horizontal, réalisées de préférence comme voie de guidage (67).

8. Dispositif de registre à glissement suivant la revendication 7, caractérisé en ce qu'une paire d'organes d'entraînement (70, 80) sont fixés à chaque coulisseau latéral (63), la longueur des coulisseaux latéraux (63) étant de préférence à peu près égale à la distance des organes d'entraînement (70, 80), de préférence même un peu plus grande.

9. Dispositif de registre à glissement suivant l'une des revendications 5 à 9, caractérisé en ce que le chariot auxiliaire (61) porte un guidage, en particulier un guidage en hauteur, pour la plaque de registre (33) qui de préférence à son extrémité arrière glisse sur des barres (74) fixées au châssis (31).

10. Dispositif de registre à glissement suivant la revendication 9, caractérisé en ce que le guidage de la plaque de registre (33) réalisé de préférence en forme de galets portants (72) est prévu sur le côté de chariot auxiliaire (61) qui se trouve sur le côté de la conumande (38, 39 ou 91 à 93) de la plaque de registre (33).

11. Dispositif de registre à glissement suivant la revendication 3 et l'une des revendications 5 à 10, caractérisé en ce que la traverse (45) est fixée au chariot auxiliaire (61) de préférence à la barre transversale (62) et sert de préférence d'organe d'entraînement (80) lors du mouvement de fermeture.

12. Dispositif de registre à glissement suivant la revendication 11, caractérisé en ce que la barre transversale (62) sert d'organe d'entraînement (80) lors du mouvement de fermeture.

13. Dispositif de registre à glissement suivant l'une des revendications 11, 12, caractérisé en ce que le bord antérieur (77) de la plaque de registre (33) et de préférence la traverse (45) sont inclinés vers le bas du côté de la plaque de registre (33).

14. Dispositif de registre à glissement suivant l'une des revendications 11 à 13, caractérisé en ce que le bord antérieur de la plaque de registre (33) présente des découpures (95) qui forment des ouvertures de passage lors de la poussée de la plaque contre la traverse (45).

15. Dispositif de registre à glissement suivant l'une des revendications 11 à 14, caractérisé en ce que le châssis (31), présente du côté opposé à la commande (38, 39) une chambre (82) destinée à recevoir la traverse (45) lors de la fermeture du passage de sortie (23).

16. Dispositif de registre à glissement suivant le préambule de la revendication 1 et les caractéristiques de la partie caractérisante d'une ou plusieurs des revendications 5 à 10, 12, 13, 15 caractérisé en ce que la traverse (45) est fixée au châssis (31) et se trouve juste au-dessus de la plaque de registre (33).

17. Transporteur en auge à chaîne pourvu d'un ou plusieurs dispositifs de registre à glissement suivant l'une des revendications 1 à 16.

0 158 873

Fig.1

Fig.2

Fig.3

Fig.4

Fig.5

Fig. 6

Fig. 7

Fig. 10

Fig. 11

Fig. 9

Fig. 8

**0 158 873**

Fig.12

Fig.13

Fig.14